# EUROPÄISCHE PATENTANMELDUNG

(11) **EP 2 975 261 A1**
(43) Veröffentlichungstag der Anmeldung: **20.01.2016**
(21) Anmeldenummer: 14177660.9
(22) Anmeldetag: 18.07.2014
(51) Int. Cl.: F03D 13/00, F03D 15/00

(54) **Windkraftanlage mit direkt angetriebenem Generator**

(71) Anmelder: Siemens Aktiengesellschaft, 80333 München (DE)
(72) Erfinder: Hartmann, Ulrich, 14197 Berlin (DE)

(57) **Zusammenfassung**

Die Erfindung betrifft eine Windkraftanlage mit einer Windturbine, die eine um eine Achse (5) drehbare Windturbinenwelle (6) und eine Welle eines Generators (17) aufweist, wobei der Generator (17) einen Stator (8) und einen Rotor (9) aufweist, wobei die Welle (7) des Generators (17) und die Windturbinenwelle (6) insbesondere einstückig ausgebildet und/oder achsfluchtend miteinander gekoppelt sind, wobei Windturbine und Generator (17) ausschließlich durch zwei Hauptlager (2) an der Windturbinenwelle (6) im Maschinengehäuse an der Spitze des Turmes der Windkraftanlage gelagert sind und wobei der Stator (8) am Maschinengehäuse (1) positioniert ist.

## Beschreibung

Die Erfindung betrifft eine Windkraftanlage mit einem Generator und einem Lagerkonzept zur Lagerung der Windturbinenwelle als auch ein Verfahren zur Positionierung eines Generators in der Windkraftanlage.

Bei Windkraftanlagen wird der Generator über ein Getriebe oder direkt über die Windturbinenwelle angetrieben. Dabei kann der Generator in Windrichtung betrachtet entweder vor dem Turm (EP 2 164 154 A1), auf dem Turm oder hinter dem Turm (EP 1 327 073 B1) angeordnet sein. Dabei sind unterschiedlichste Lagereinheiten einzusetzen um die rotierenden Teile abstützen und um einen dementsprechenden Biegeverlauf der Turbinenwelle unbeschadet zu überstehen.

Ausgehend davon liegt der Erfindung die Aufgabe zugrunde, für Windkraftanlagen ein Generatorkonzept vorzusehen, dass die Lagereinheiten auf ein Minimum reduziert bei gleichzeitiger technischer Zuverlässigkeit und Wirtschaftlichkeit.

Die Lösung der gestellten Aufgabe gelingt durch eine Windkraftanlage mit einer Windturbine, die eine um eine Achse drehbare Windturbinenwelle und eine Welle eines Generators aufweist, wobei der Generator einen Stator und einen Rotor aufweist, wobei die Welle des Generators und die Windturbinenwelle einstückig ausgebildet und/oder achsfluchtend miteinander gekoppelt sind, wobei Windturbine und Generator ausschließlich durch zwei Hauptlager an der Windturbinenwelle im Maschinengehäuse an der Spitze des Turmes der Windkraftanlage gelagert sind und wobei der Stator am Maschinengehäuse positioniert ist.

Die Lösung der gestellten Aufgabe gelingt auch durch ein Verfahren zur Montage eines Generators an eine Windkraftanlage mit einer Windturbine, die eine um eine Achse drehbare Windturbinenwelle und eine Welle eines Generators aufweist, wobei der Generator einen Stator und einen Rotor aufweist, wobei die Welle des Generators und die Windturbinenwelle insbesondere einstückig ausgebildet oder achsfluchtend miteinander gekoppelt sind, wobei Windturbine und Generator ausschließlich durch zwei Hauptlager an der Windturbinenwelle im Maschinengehäuse an der Spitze des Turmes der Windkraftanlage gelagert sind und wobei der Stator am Maschinengehäuse positioniert ist. durch folgende Schritte:
- korrespondierende Segmente von Stator und Rotor werden vorgefertigt und paarweise, d.h. jeweils ein Statorsegment und ein Rotorsegment mit einer Transportsicherung versehen, die insbesondere dem Luftspalt des späteren Generators entspricht,
- Zusammensetzen der Segmentpaare zu einem Generator am Fuße der Windkraftanlage, wobei der Generator dann als Ganzes an der axialen Verlängerung der Windturbinenwelle fixiert wird,
- Fixieren der Statorsegmente am Maschinengehäuse der Windkraftanlage und anschließendes Lösen der Transportsicherungen der Segmentpaare.

Die Lösung der gestellten Aufgabe gelingt auch durch ein Verfahren zur Montage eines Generators an eine Windkraftanlage mit einer Windturbine, die eine um eine Achse drehbare Windturbinenwelle und eine Welle eines Generators aufweist, wobei der Generator einen Stator und einen Rotor aufweist, wobei die Welle des Generators und die Windturbinenwelle insbesondere einstückig ausgebildet oder achsfluchtend miteinander gekoppelt sind, wobei Windturbine und Generator ausschließlich durch zwei Hauptlager an der Windturbinenwelle im Maschinengehäuse an der Spitze des Turmes der Windkraftanlage gelagert sind und wobei der Stator am Maschinengehäuse positioniert ist. durch folgende Schritte:
- korrespondierende Segmente von Stator und Rotor werden vorgefertigt und paarweise, d.h. jeweils ein Statorsegment und ein Rotorsegment mit einer Transportsicherung versehen, die insbesondere dem Luftspalt des späteren Generators entspricht,
- Ansetzen der Segmentpaare direkt an die Windturbinenwelle, wobei sich der Generator an der axialen Verlängerung der Windturbinenwelle Schritt für Schritt ergibt,
- Fixieren der Statorsegmente am Maschinengehäuse der Windkraftanlage und anschließendes Lösen der Transportsicherungen der Segmentpaare.

Die Lösung der gestellten Aufgabe gelingt auch durch ein Verfahren zur Montage eines Generators an eine Windkraftanlage mit einer Windturbine, die eine um eine Achse drehbare Windturbinenwelle und eine Welle eines Generators aufweist, wobei der Generator einen Stator und einen Rotor aufweist, wobei die Welle des Generators und die Windturbinenwelle insbesondere einstückig ausgebildet oder achsfluchtend miteinander gekoppelt sind, wobei Windturbine und Generator ausschließlich durch zwei Hauptlager an der Windturbinenwelle im Maschinengehäuse an der Spitze des Turmes der Windkraftanlage gelagert sind und wobei der Stator am Maschinengehäuse positioniert ist. durch folgende Schritte:
- der Generator wird im Werk vorgefertigt und mit einer Generatorwelle oder einer Tragstruktur des Rotors und vor Ort direkt an die axiale Verlängerung der Windturbinenwelle gesetzt.
- Fixieren des Stators am Maschinengehäuse der Windkraftanlage.

Erfindungsgemäß wird nunmehr der Generator in Windrichtung betrachtet hinter dem Turm ohne eigene Lagerung angeordnet. D.h., es gibt lediglich zwei Hauptlager, die die Windturbinenwelle halten, fixieren und lagern. Der Stator des Generators ist dabei axial und/oder in Umfangsrichtung fest mit dem Maschinengehäuse verbunden, der Rotor ist mit der Turbinenwelle verbunden. Dabei ist entweder der Rotor direkt auf die Verlängerung der Turbinenwelle positioniert oder der Rotor wird mit seiner eigenen Generatorwelle axial an die Windturbinenwelle angeflanscht.

Vorteilhafterweise ist der Stator über eine einstellbare Befestigung am Maschinengehäuse fixiert, was eine Montage insbesondere von segmentiertem Generator und/oder Rotorsegmenten wesentlich erleichtert. Dies ist notwendig, damit der Luftspalt des Generators einfach und exakt eingestellt werden kann. Bevor der Generator auf der Anlage montiert ist, positionieren Transportvorrichtungen die Lage des Rotors gegenüber dem Stator bzw. die Lage der Rotorsegmente gegenüber den jeweiligen Statorsegmenten. Diese Transportsicherungen werden nach erfolgter Montage des Generators demontiert.

Durch die Transportsicherungen ist eine Koaxialität von Rotor und Stator auch ohne Lager sichergestellt. Die Montage des Generators auf die Turbinenwelle kann dann z.B. über eine Zentrierung des Rotors auf der Turbinenwelle erfolgen.

Sowohl der Rotor als auch der Stator sind dabei vorzugsweise in segmentierte Bauform beispielsweise jeweils aus vier Segmenten ausgeführt.

Vorteilhafterweise werden dabei die Segmente paarweise bereitgestellt. D.h., ein Statorsegment und ein Rotorsegment werden zusammen als eine Einheit geliefert, was unter anderem den Vorteil beinhaltet, dass die Permanentmagnete auf dem Rotor durch den Stator bereits magnetisch abgeschirmt sind.

Erfindungsgemäß können die korrespondierenden Segmente vor Ort bereits zu einem Generator zusammengesetzt werden und anschließend axial an die Turbinenwelle oben am Turm angebracht werden. Ebenso ist es möglich Einzelsegmente des Generators jeweils oben an die Turbinenwelle auf die jeweils vorgesehenen Tragstrukturen zu positionieren.

Ein derartiges Anlagenkonzept eignet sich insbesondere für Windkraftanlagen kleinerer und mittlerer Leistung, z.B. 0,5 bis 4 MW. Durch dieses erfindungsgemäße Anlagenkonzept wird aufgrund der fehlenden Generatorlagerung das Ausfallrisiko einer Lagerung reduziert, ebenso steigert sich die Wirtschaftlichkeit, da weniger Lagerstellen, weniger Kosten und einen geringeren Fertigungsaufwand bedeuten. Ebenso reduziert sich aufgrund der vergleichsweise geringeren Anzahl der Lagerstellen der Wartungsaufwand der Windkraftanlage.

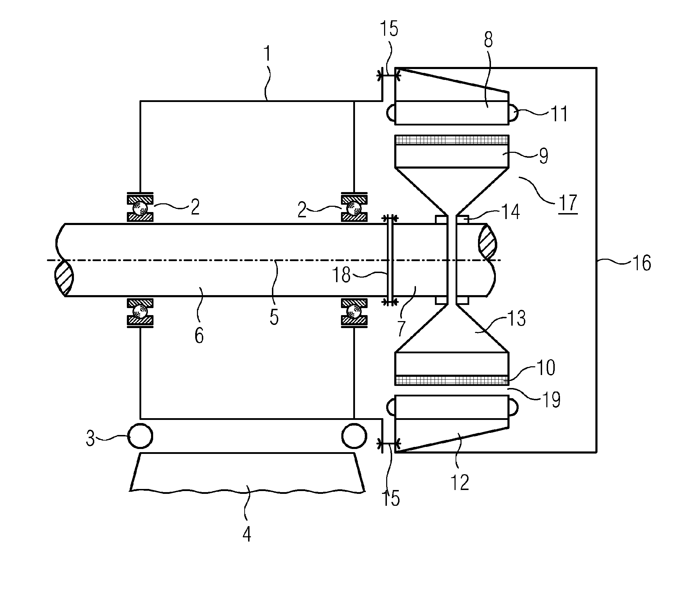

Die Erfindung sowie eine vorteilhafte Ausgestaltung der Erfindung ist der Figur zu entnehmen.

Die Figur zeigt einen Teillängsschnitt einer nicht näher dargestellten Windkraftanlage, wobei eine von der Windturbine bereitgestelltes Drehmoment über eine Windturbinenwelle 6, die sich über um eine Achse 5 dreht, einem Generator 17 zugeführt wird. Die Turbinenwelle 6 ist ausschließlich auf zwei Hauptlager 2 gehalten und fixiert, die in einem Maschinengehäuse 1 angeordnet sind. Das Maschinengehäuse 1 ist über ein Azimutlager 3 am Turm abgestützt. In axialer Verlängerung der Windturbinenwelle 6 befindet sich der Generator 17, der auf einer Tragkonstruktion 13 Rotorelemente aufweist. Der durch die Rotorelemente gebildete Rotor 9 weist dabei zu einem Luftspalt 19 des Generators 17 weisende Permanentmagnete 10 auf.

Diese Permanentmagnete 10 können dabei als Oberflächenmagnete oder "vergrabene Magnete" am Rotor 9 bzw. Rotorsegment angebracht sein. Oberflächenmagnete sind dabei Magnete, die an der Oberfläche des Rotors 9 oder Rotorsegments mittels Kleber und/oder Bandage gehalten sind. "Vergrabene Magnete" sind Magnete, die in im Wesentlichen axial verlaufenden, in Umfangsrichtung betrachtet geschlossenen Ausnehmungen beispielsweise durch Harz oder eine andere vorzugsweise magnetisch leitfähige Vergussmasse positioniert sind.

Radial an den Rotor 9 und Luftspalt 19 schließt sich ein Stator 8 mit seinem Wicklungssystem an, das an den Stirnseiten des Stators 8 Wickelköpfe 11 ausbildet. Der Stator 8 ist über eine Tragstruktur 12 am Maschinengehäuse 1 befestigt. Der gesamte Generator 17 ist durch eine Abdeckung 16 nach außen insbesondere gegen Witterungseinflüsse abgeschirmt.

Aufgrund dieses erfindungsgemäßen Anlagenkonzeptes ist es nunmehr lediglich erforderlich zwei Hauptlager 2 vorzusehen, wobei sich der Generator 17 in axialer Verlängerung der Windturbinenwelle 6 befindet. Der direkt angetriebene Generator 17 kann bereits vor Ort segmentweise zusammengebaut werden. Ebenso können die einzelnen Segmente des Generators 17 oben direkt bereits an die Turbinenwelle 6 über die Tragstruktur 13 des Rotors 9 und die Schnittstelle 14 an die Turbinenwelle 6 angebracht werden.

Alternativ dazu ist es möglich, auch einen Wellenstumpf 7, der als Welle des Generators 17 zu betrachten ist, im Werk oder vor Ort zu bestücken und dann den gesamten Generator 17 an die Turbinenwelle 6 über eine für diesen Fall notwendige Wellenverbindung 18 zu flanschen. Anschließend wird der Stator 8 über seine Befestigung 15 am Maschinengehäuse 1 fixiert.

Der Generator 17 weist bei jeder Ausführung kein eigenes Lager auf.

## Patentansprüche

1. Windkraftanlage mit einer Windturbine, die eine um eine Achse (5) drehbare Windturbinenwelle (6) und eine Welle eines Generators (17) aufweist, wobei der Generator (17) einen Stator (8) und einen Rotor (9) aufweist, wobei die Welle (7) des Generators (17) und die Windturbinenwelle (6) insbesondere einstückig ausgebildet und/oder achsfluchtend miteinander gekoppelt sind, wobei Windturbine und Generator (17) ausschließlich durch zwei Hauptlager (2) an der Windturbinenwelle (6) im Maschinengehäuse an der Spitze des Turmes der Windkraftanlage gelagert sind und wobei der Stator (8) am Maschinengehäuse (1) positioniert ist.

2. Windkraftanlage nach Anspruch 1, **dadurch ge- kennzeichnet,** dass der Stator (8) am Maschinengehäuse (1) über zumindest eine einstellbare Befestigung (15) fixiert ist.

3. Windkraftanlage nach Anspruch 1 oder 2, **dadurch gekennzeichnet, dass** der Rotor (9) Permanentmagnete aufweist, die zu einem Luftspalt (19) des Generators (17) weisen.

4. Windkraftanlage nach einem der vorhergehenden Ansprüche, **dadurch gekennzeichnet, dass** der Generator (17) in Umfangsrichtung des Generators (17) betrachtet segmentiert aufgebaut ist, wobei Stator (8) und/oder Rotor (9) jeweils segmentiert aufgebaut sind.

5. Windkraftanlage nach einem der vorhergehenden Ansprüche, **dadurch gekennzeichnet, dass** der Generator (17) auf der der Windturbine abgewandten Seite des Turmes der Windkraftanlage ist.

6. Verfahren zur Montage eines Generators (17) an eine Windkraftanlage nach Anspruch 1 durch folgende Schritte:
- korrespondierende Segmente von Stator (8) und Rotor (9) werden vorgefertigt und paarweise, d.h. jeweils ein Statorsegment und ein Rotorsegment mit einer Transportsicherung versehen, die insbesondere dem Luftspalt (19) des späteren Generators (17) entspricht,
- Zusammensetzen der Segmentpaare zu einem Generator (17) am Fuße der Windkraftanlage, wobei der Generator (17) dann als Ganzes an der axialen Verlängerung der Windturbinenwelle (6) fixiert wird,
- Fixieren der Statorsegmente am Maschinengehäuse (1) der Windkraftanlage und anschließendes Lösen der Transportsicherungen der Segmentpaare.

7. Verfahren zur Montage eines Generators (17) an eine Windkraftanlage nach Anspruch 1 durch folgende Schritte:
- korrespondierende Segmente von Stator (8) und Rotor (9) werden vorgefertigt und paarweise, d.h. jeweils ein Statorsegment und ein Rotorsegment mit einer Transportsicherung versehen, die insbesondere dem Luftspalt (19) des späteren Generators (17) entspricht,
- Ansetzen der Segmentpaare direkt an die Windturbinenwelle (6), wobei sich der Generator (17) an der axialen Verlängerung der Windturbinenwelle (6) Schritt für Schritt ergibt,
- Fixieren der Statorsegmente am Maschinengehäuse (1) der Windkraftanlage und anschließendes Lösen der Transportsicherungen der Segmentpaare.

8. Verfahren zur Montage eines Generators (17) an eine Windkraftanlage nach Anspruch 1 durch folgende Schritte:
- der Generator (17) wird im Werk vorgefertigt und mit einer Generatorwelle oder einer Tragstruktur des Rotors und vor Ort direkt an die axiale Verlängerung der Windturbinenwelle (6) gesetzt,
- Fixieren des Stators (8) am Maschinengehäuse (1) der Windkraftanlage.
